# EUROPÄISCHE PATENTANMELDUNG

(11) **EP 3 379 078 A1**
(43) Veröffentlichungstag der Anmeldung: **26.09.2018**
(21) Anmeldenummer: 17162522.1
(22) Anmeldetag: 23.03.2017
(51) Int. Cl.: F03D 80/80, F03D 13/20, F03D 13/10, E04H 12/34

(54) **VERFAHREN UND VORRICHTUNG ZUR MONTAGE EINES TURMS FÜR EINE WINDENERGIEANLAGE UND TURM EINER WINDENERGIEANLAGE**

(71) Anmelder: Nordex Energy GmbH, 22419 Hamburg (DE)
(72) Erfinder: Türk, Ibrahim, 22769 Hamburg (DE); Derksen, Juri, 32427 Minden (DE); Melcher, Axel, 18069 Rostock (DE); Günther, Christian, 22307 Hamburg (DE); Winkler, Armin, 23560 Lübeck (DE)
(74) Vertreter: Garrels, Sabine

(57) **Zusammenfassung**

Verfahren zur Montage eines Stahlturms für eine Windenergieanlage, welcher eine Mehrzahl von Turmsektionen umfasst, wobei wenigstens eine Turmsektion aus Sektionssegmenten gebildet ist, mit den Schritten: Verankern einer ersten Mastsektion auf einem vorbereiteten Fundament, Anordnen und Positionieren einer ersten vertikal bewegbaren Arbeitsplattform in einer vorbestimmten Höhe an der ersten Mastsektion, Anordnen und Positionieren einer vertikal bewegbaren Stützarmeinheit oberhalb der Arbeitsplattform an der ersten Mastsektion, Anordnen und Befestigen einer Mehrzahl von Turmfußsegmenten auf dem Fundament, Aufstellen und Verbinden eines ersten Sektionssegments mit einem ersten Turmfußsegment, Fixieren des ersten Sektionssegments mittels wenigstens eines ausfahrbaren Stützarms der Stützarmeinheit, Aufstellen und Verbinden weiterer Sektionssegmente mit dem oder einem weiteren Turmfußsegment und mit dem zuvor montierten Sektionssegment, sowie Einfügen und Fixieren des jeweils letzten Sektionssegments mittels eines weiteren ausfahrbaren Stützarms der Stützarmeinheit, bis eine vollständige erste Turmsektion aufgestellt und verbunden ist, und Montieren und Verbinden wenigstens einer weiteren Turmsektion mit der ersten Turmsektion unter Zuhilfenahme einer weiteren Mastsektion.

## Beschreibung

Die Erfindung betrifft die Montage von Türmen, insbesondere Stahltürmen für Windenergieanlagen. Die erfindungsgemäße Lösung betrifft die innenseitigen Montage von horizontal und/oder vertikal geteilten Sektionstürmen und die dafür benötigten Montagevorrichtungen.

Um die im Verhältnis zu den Windgeschwindigkeiten in Bodennähe in größeren Höhen höheren Windgeschwindigkeiten nutzen zu können, werden immer höhere Nabenhöhen angestrebt und größere Rotorblätter eingesetzt. Damit einhergehend werden höhere Türme benötigt. Dies führt aus Stabilitätsgründen zu größeren Durchmessern derselben. Aufgrund von Logistikproblemen, insbesondere beim Überlandtransport, sind die Durchmesser und Längen der zu transportierenden Teile begrenzt. Daher werden Segmente und Sektionen eines Turms im Herstellerwerk vorkonfektioniert und erst am Errichtungsort zusammengebaut. Es sind verschiedene Montagekonzepte am Errichtungsort bekannt. Beispielsweise werden Einzelsegmente auf einem Montageplatz am Boden mit Hilfe eines oder mehrerer Kräne und Montagevorrichtungen zu Sektionen vormontiert. Nachfolgend werden die vormontierten Sektionen mit einem geeigneten höheren Kran aufeinandergesetzt und miteinander verschraubt. Nachteile dieses Konzepts sind sehr hohe Kosten, da mehrere Kräne gleichzeitig erforderlich sind. Zudem müssen zwei Montageteams, nämlich am Boden und auf dem Turm, gleichzeitig tätig sein. Weiterhin sind zusätzliche Montagevorrichtungen am Boden notwendig. Für eine liegende Vormontage der Turmsektionen wird zudem eine große ebene Fläche am Boden benötigt, was vielerorts nicht gegeben ist.

Bei einer weiteren Montageweise werden einzelne Segmente mit Hilfe eines außerhalb des Turms stehenden Krans montiert. Nachteilig ist hierbei, dass eine Einzelmontage relativ lange dauert und somit hohe Kosten für den benötigten entsprechend hohen Kran entstehen. Ferner müssen bei den heute großen Durchmessern der Türme entsprechende Montagebühnen und Montagevorrichtungen ständig mit dem Kran verstellt werden. Schließlich muss innerhalb des Turms eine Befahranlage für den Betrieb der Windenergieanlage zusätzlich eingerichtet werden. Dabei ist die Erreichbarkeit der Verschraubungen, der Gefahrenfeuer, Leistungskabel und von anderen Einbauten des Turms insbesondere während des Betriebes und während einer Wartung der Windenergieanlage sehr erschwert.

Die WO 2012/007226 A2 offenbart eine Montagevorrichtung für die Montage eines Windturbinenturms mit einem vertikal ausgerichteten Mast, an welchem ein oder mehrere im Wesentlichen horizontal ausgerichtete Ausleger verbunden sind. Die Ausleger tragen eine Plattform oder einen Hubarbeitskorb. Weiterhin ist ein Ausleger an seinem distalen Ende mit Haltemitteln verbunden, welche ein Turmbausegment halten. Der Turmabschnitt wird um den vertikal ausgerichteten Mast herumgebaut.

In DE 10 2011 076 648 A1 wird ein Verfahren zum Errichten einer Windkraftanlage mit einem Fundament und einem Turmbauwerk beschrieben, wobei zumindest ein erster Abschnitt des Turmbauwerks aus Fertigteilen auf einem Fundament erstellt wird. Über ein Kopflagerelement und ein Fußlagerelement des Fundaments werden die Fertigteile miteinander verbunden. Nach dem Verbinden der Fertigteile des ersten Abschnitts wird ein Turmdrehkran an dem Kopflagerelement horizontal verankert und anschließend ein zweiter Abschnitt des Turmbauwerks mit Hilfe eines Turmdrehkrans montiert.

Die DE 10 2013 208 760 A1 schlägt eine Windenergieanlage mit einem Turm vor, welcher eine Mehrzahl von Turmsegmenten aufweist. Einige der Turmsegmente sind aus einer Mehrzahl von Turmsegmentteilen aufgebaut. Die Turmsegmentteile sind über Schraubverbindungen miteinander verbunden. Die Windenergieanlage weist ferner mindestens ein sich zumindest teilweise entlang der Länge des Turms erstreckendes Führungsseil auf. Die Windenergieanlage weist ebenfalls eine Arbeitsbühne auf, welche mit dem Führungsseil zur Führung befestigbar ist und über ein Fahrseil nach oben und unten bewegt werden kann.

Die Aufgabe der Erfindung ist es, die Komplexität der Montage zu vereinfachen und ein für den Errichtungs- und Betriebszustand integriertes Einbautenkonzept zu realisieren. Die Montage, der Betrieb und der Service sollen sicherer gestaltet werden und die Kosten für Installation und Service von Stahltürmen sowie Turmeinbauten in solchen Türmen sollen reduziert werden. Weiterhin soll der benötigte Grundflächenbedarf minimiert werden.

Die Aufgabe wird gelöst durch ein Verfahren zur Montage eines Stahlturms für eine Windenergieanlage, welcher eine Mehrzahl von Turmsektionen umfasst, wobei wenigstens eine Turmsektion aus Sektionssegmenten gebildet ist, mit den Schritten:
- Verankern einer ersten Mastsektion auf einem vorbereiteten Fundament,
- Anordnen und Positionieren einer ersten vertikal bewegbaren Arbeitsplattform in einer vorbestimmten Höhe an der ersten Mastsektion,
- Anordnen und Positionieren einer vertikal bewegbaren Stützarmeinheit oberhalb der Arbeitsplattform an der ersten Mastsektion,
- Anordnen und Befestigen einer Mehrzahl von Turmfußsegmenten auf dem Fundament,
- Aufstellen und Verbinden eines ersten Sektionssegments mit einem ersten Turmfußsegment,
- Fixieren des ersten Sektionssegments mittels wenigstens eines ausfahrbaren Stützarms der Stützarmeinheit,
- Aufstellen und Verbinden weiterer Sektionssegmente mit dem oder einem weiteren Turmfußsegment und mit dem zuvor montierten Sektionssegment, sowie Einfügen und Fixieren des jeweils letzten Sektionssegments mittels eines weiteren ausfahrbaren Stützarms der Stützarmeinheit, bis eine vollständige erste Turmsektion aufgestellt und verbunden ist, und
- Montieren und Verbinden wenigstens einer weiteren Turmsektion mit der ersten Turmsektion unter Zuhilfenahme einer weiteren Mastsektion.

Eine vorteilhafte optionale Weiterbildung des Verfahrens umfasst den zusätzlichen Schritt, dass nach dem Anordnen der ersten Arbeitsplattform und vor dem Anordnen der Stützarmeinheit eine zweite vertikal bewegbare Arbeitsplattform an der Mastsektion bewegbar angeordnet wird. Hiermit ist in vorteilhafter Weise sichergestellt, dass zwei Monteure ein Sektionssegment oben und unten gleichzeitig mit Nachbarsegmenten sicher verbinden, insbesondere verschrauben können.

Mit der vertikal bewegbaren Arbeitsplattform sind ein Steg und/oder eine Arbeitsbühne verbunden. Bevorzugt erfolgt nach dem Verbinden eines Sektionssegments mit einem horizontal benachbarten Sektionssegment ein Schwenken des Stegs und/oder der Arbeitsbühne um einen vorbestimmten Winkel um die vertikale Achse der Mastsektion bzw. des Mastes.

Eine bevorzugte Weiterbildung des Verfahrens umfasst die zusätzlichen Schritte:
- Heben der weiteren Mastsektion mit Hilfe eines Krans von einem Lagerplatz,
- Absetzen der weiteren Mastsektion mit Hilfe des Krans in einer vorbestimmten Position auf der ersten Mastsektion derart, dass eine Zahnstange und/oder ein Führungselement der ersten Mastsektion und eine Zahnstange und/oder ein Führungselement der weiteren Mastsektion miteinander, insbesondere teilungsgenau fluchten und
- Verbinden der weiteren Mastsektion mit der ersten Mastsektion zur Bildung eines Mastes mit einer durchgehenden Zahnstange und/oder wenigstens einem durchgehenden Führungselement. Das Führungselement kann als eine am Mast gehalterte Führungsschiene, direkt als Mastpfosten oder als ein anderes spurgebundenes Element ausgebildet sein.

Eine besonders bevorzugten Weiterbildung des Verfahrens umfasst die weiteren Schritte:
- Einfahren der Stützarme,
- Aufwärtsfahren der Stützarmeinheit mittels eines Antriebs entlang der Zahnstange und/oder dem Führungselement,
- Ausfahren der Stützarme auf ein vorbestimmtes Maß entsprechend dem vorgegebenen Abstand vom Mast zu einer Innenseite des jeweils vorgesehenen Sektionssegments und
- Aufwärtsfahren der Arbeitsplattform mittels eines Antriebs entlang der Zahnstange und/oder dem Führungselement des Mastes.

Das erfindungsgemäße Verfahren setzt sich bevorzugt wie folgt fort:
- Aufstellen und Verbinden eines ersten Sektionssegments der weiteren Turmsektion mit einem Sektionssegment der vorhergehenden Turmsektion,
- Fixieren des Sektionssegments der weiteren Turmsektion mittels wenigstens eines ausfahrbaren Stützarms der Stützarmeinheit,
- Aufstellen und Verbinden der weiteren Sektionssegmente, jeweils mit dem zuvor montierten, benachbarten Sektionssegment, sowie Einfügen und Fixieren des jeweils letzten Sektionssegments mittels eines zweiten Stützarms der Stützarmeinheit und
- Verbinden des letzten Sektionssegments mit den benachbarten Sektionssegmenten zum Bilden einer vollständigen weiteren Turmsektion. Als weitere Turmsektion soll die zweite, dritte usw. Turmsektion verstanden werden, abhängig von der Anzahl der aus einzelnen Sektionssegmenten gebildeten Turmsektionen; als vorhergehende Turmsektion soll die zuvor zuletzt auf diese Weise errichtete Turmsektion bzw. der schon errichtete Turmstumpf verstanden werden.

Vorteilhaft wird in einem weiteren Schritt ein horizontaler Turmflansch mit Hilfe eines Krans auf die oberste aus Sektionssegmenten gebildeten Turmsektion aufgesetzt und mit dieser verbunden. Auf diesen horizontalen Turmflansch kann entweder eine weitere Turmsektion aufgesetzt werden, die in bekannter Weise einteilig ausgebildet ist, oder es kann direkt die Gondel der Windenergieanlage aufgesetzt werden.

Das erfindungsgemäße Verfahren weist in einer bevorzugten Weiterbildung eine abschließenden Arbeitsfolge oder Sequenz mit den folgenden Schritten auf:
- Einfahren der Stützarme der Stützarmeinheit,
- Hochfahren der Stützarmeinheit in eine obere Position,
- Entkoppeln, Heben und Entfernen der Stützarmeinheit vom Mast mittels eines Krans.

Wenn eine zweite Arbeitsplattform vorhanden ist, folgen bevorzugt die zusätzlichen Schritte:
- Hochfahren der zweiten Arbeitsplattform in die obere Position,
- Entkoppeln, Heben und Entfernen der zweiten Arbeitsplattform vom Mast mittels eines Krans.

Die Aufgabe wird auch gelöst durch einen Turm, beispielsweise Stahlturm, für eine Windenergieanlage mit mehreren unterschiedlichen Turmsektionen, wobei zumindest eine Turmsektion aus einzelnen Sektionssegmenten besteht, wobei der Turm ein Fundament mit wenigstens zwei, bevorzugt wenigstens drei Turmfußsegmenten aufweist, wobei jedes Turmfußsegment mit wenigstens einem Sektionssegment verbunden ist und sämtliche Sektionssegmente einer ersten horizontalen Ebene eine erste gerade oder konische Turmsektion mit kreisförmigem oder polygonalem Querschnitt bilden und auf dieser ersten segmentierten Turmsektion eine weitere segmentierte Turmsektion oder eine nichtsegmentierte Turmsektion angeordnet ist und wobei ein Mast zentral oder außermittig zu einer vertikalen Turmachse im Inneren der Turmsektionen angeordnet ist, welcher wenigstens eine vertikal bewegbare Arbeitsplattform trägt. Die wenigsten zwei, bevorzugt wenigstens drei Turmfußsegmente sind L- oder T-förmig ausgebildet, wobei ein Schenkel auf dem Fundament aufliegt und mit diesem verbunden ist und ein Schenkel im Wesentlichen senkrecht steht und der Halterung der Sektionssegmente dient. Die Mehrzahl von Turmfußsegmenten bildet auf dem Fundament einen geschlossenen Kreis oder ein geschlossenes Vieleck.

In einer ersten Weiterbildung ist der Mast bevorzugt aus einer Mehrzahl von Mastsektionen gebildet, die insbesondere als offenes oder geschlossenes rohrförmiges Hohlprofil ausgebildet sein können. Neben kreisförmigen Hohlprofilen sind auch andere z.B. polygonale Hohlprofile, vorzugsweise mit gerundeten Kanten geeignet. In einer bevorzugten Ausgestaltung ist ein Gittermast vorgesehen. Aber auch andere Metallwinkelprofile, wie beispielsweise T-, H-Profile oder Z-Profil sind möglich. Ein derartiger Mast bietet eine Vielzahl von Vorteilen, so kann der Mast zunächst für eine Befahranlage, einen Lift, eine Serviceplattform und insbesondere für die Arbeitsplattform als Träger genutzt werden. Der Mast kann weiterhin Einbauten jeder Art, so für Befestigungsmittel, insbesondere für Leistungs- und Versorgungskabel, für Leitern und Beleuchtungseinrichtungen genutzt werden. Hiermit wird besonders vorteilhaft eine Bearbeitung und/oder Schwächung der Turmhülle vermieden.

In einer bevorzugten Weiterbildung umfassen die Mastsektionen jeweils eine Zahnstange und/oder wenigstens ein Führungselement zum Führen der Arbeitsplattform.

In einer bevorzugten Weiterbildung weist die Arbeitsplattform wenigstens einen ausfahrbaren und begehbaren Steg und/oder eine Arbeitsbühne für Wartungs- und Servicepersonal auf. Der Durchmesser der Arbeitsplattform ist somit schnell und einfach an den Innendurchmesser des Stahlturms anpassbar.

Bevorzugt sind der begehbare Steg und/oder die Arbeitsbühne an einer Basisplattform der Arbeitsplattform um die vertikale Achse des Mastes schwenkbar gelagert. Schließlich ist die Arbeitsplattform vollständig, d.h., allseitig mit einem Geländer eingefasst. Die erfindungsgemäße Ausgestaltung der Arbeitsplattform schafft die Möglichkeit, zu jeder Zeit mit der Arbeitsplattform über die gesamte Höhe des Turms von einer Turmzugangsplattform bis direkt unterhalb der Gondel zu fahren. Ein weiterer Vorteil ist der Verzicht auf einen zusätzlichen Lift oder eine weitere Befahranlage. Ferner sind keine Seilteams für die Wartung von Schraubverbindungen, Flugfeuern, Leistungskabeln usw. notwendig, d. h., die Sicherheit und Zugänglichkeit wird erheblich verbessert. Letztlich senkt der Verzicht auf Zwischenplattformen innerhalb des Turms die Kosten für Einbauten.

Aus dem erfindungsgemäßen Verfahren ergeben sich insbesondere Vorteile hinsichtlich der Krankosten. So wird ein leistungsfähiger hoher Kran erst zum Ende der Turmmontage für relativ kurze Zeit benötigt, nämlich für das Montieren der obersten Stahlturmsektionen und zum Herausheben der Arbeitsplattformen. Beim Errichten der Turmsektionen oder des gesamten Turms in Einzelmontage ist aufgrund der gegenüber einer kompletten Turmsektion deutlich leichteren Sektionssegmente, der Einsatz eines weniger leistungsfähigen und damit kostengünstigeren Krans möglich.

Weiterhin entfällt der Einsatz eines Krans zum Umsetzen der Arbeitsplattform von Sektion zu Sektion, da die Arbeitsplattform in der Vertikalen frei verfahrbar ist.

Die Erfindung wird nachfolgend anhand eines Ausführungsbeispiels erläutert. Hierzu zeigen
Fig. 1: eine Windenergieanlage mit einem erfindungsgemäßen Turm,
Fig. 2: einen erfindungsgemäßen Stahlturm,
Fig. 3: eine Zwischenstufe beim Errichten eines Stahlturms,
Fig. 4: eine weitere Zwischenstufe beim Errichten eines Stahlturms,
Fig. 5: ein Fundament mit einer erster Mastsektion,
Fig. 6: ein Fundament mit einer Mastsektion mit zwei Arbeitsplattformen und einer Stützarmeinheit,
Fig. 7: das Montieren eines ersten Sektionssegments,
Fig. 8: das Fixierung des ersten Sektionssegments an der Stützarmeinheit,
Fig. 9: das Einsetzen des letzten Sektionssegments einer ersten Turmsektion und
Fig. 10: die erste Turmsektion und eine zweite Mastsektion.

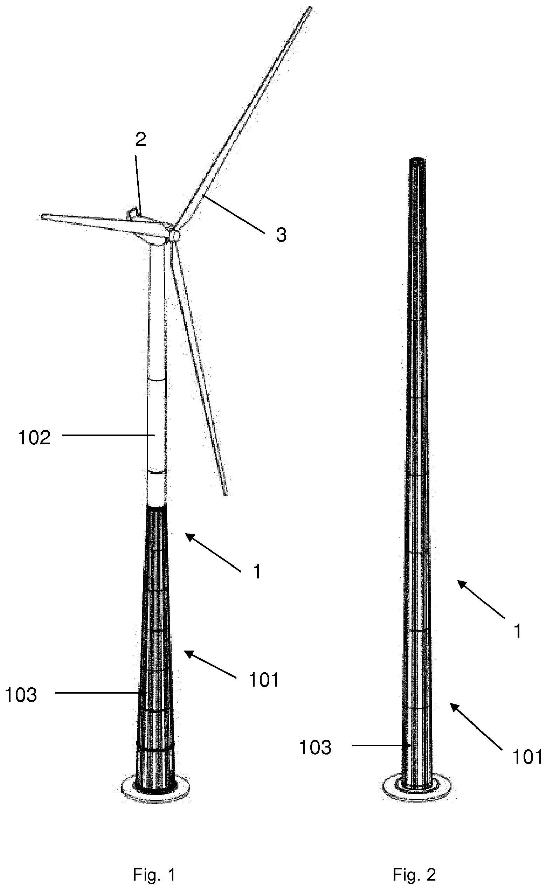

Eine Windenergieanlage mit einem erfindungsgemäßen Turm in Kombinationsbauweise wird in Fig. 1 gezeigt. Der Stahlturm 1 ist im Ausführungsbeispiel in der Vertikalen in mehrere unterschiedliche Turmsektionen 101, 102 unterteilt. In dem unteren zum Boden gerichteten Abschnitt bestehen die Turmsektionen 101 aus einzelnen Sektionssegmenten 103. Der obere Abschnitt mit geringerem Durchmesser weist dagegen Turmsektionen 102 in geschlossener Stahlrohrbauart auf. Auf der obersten Turmsektionen 102 ist eine Gondel 2 angeordnet, welche u.a. einen Generator und eine Hauptwelle beinhaltet. Mit der Hauptwelle ist eine Nabe nebst Rotorblättern 3 verbunden.

Fig. 2 zeigt dagegen einen erfindungsgemäßen Stahlturm 1 einer Windenergieanlage, dessen Turmsektionen 101 vollständig aus einzelnen Sektionssegmenten 103 bestehen.

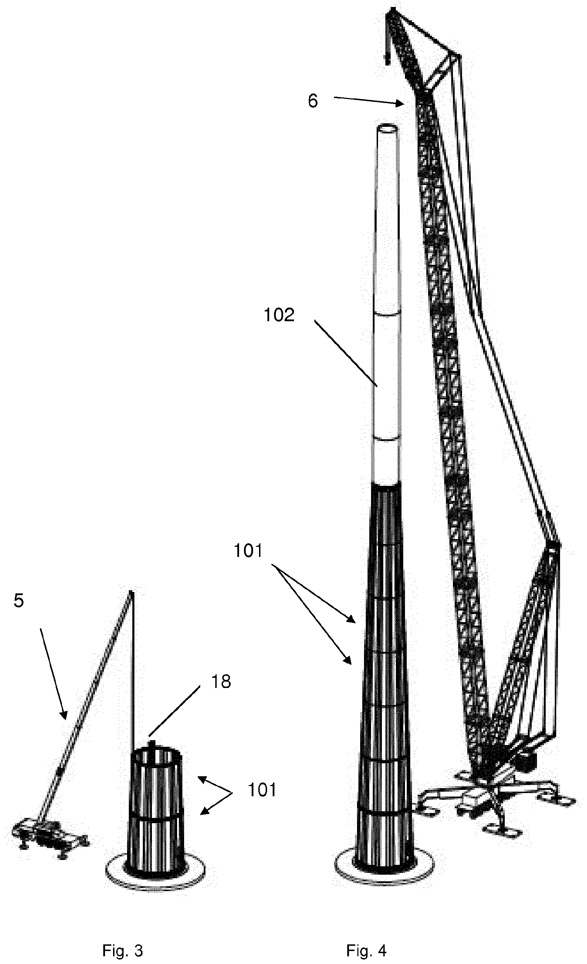

Fig. 3 zeigt das Errichten eines Stahlturms 1 in Segmentbauweise gemäß der Erfindung. Dazu werden die einzelnen Turmsektionen 101, welche aus einzelnen Sektionssegmenten bestehen, nach und nach aufgebaut. Für die Einzelmontage der Sektionssegmente am Errichtungsort wird zunächst lediglich ein erster, kleinerer mobiler Teleskopkran 5 eingesetzt, wie die Fig. 3 erkennen lässt. Nachfolgend wird für einen relativ kurzen Zeitraum ein zweiter, insbesondere größerer Kran 6 für die Errichtung des oberen Teils der Windenergieanlage benötigt, wie Fig. 4 zeigt.

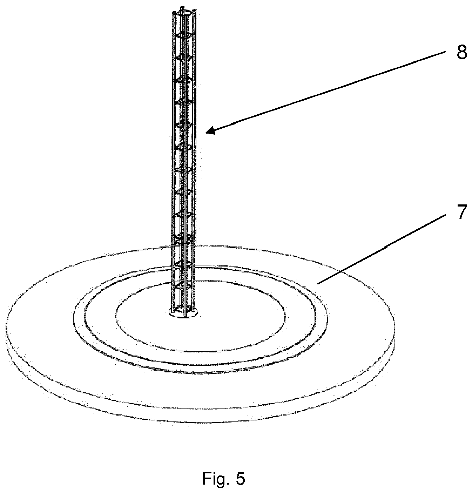

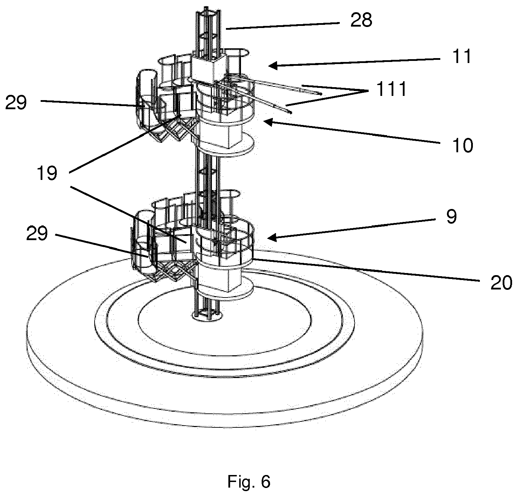

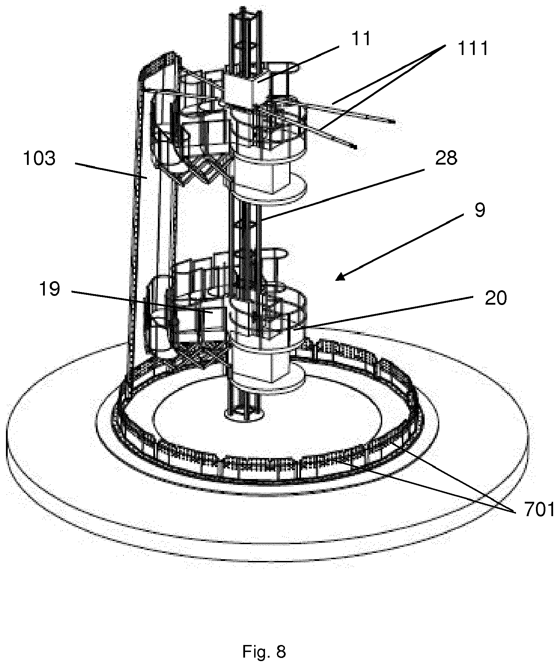

Die Figuren 5 bis 10 zeigen die einzelnen Montageschritte für den Aufbau des Stahlturms 1 einer Windenergieanlage von Beginn an. In Fig. 5 ist eine erste Mastsektion 8 bereits auf dem Fundament 7 verankert, wobei die Mastsektion 8 zentral oder außermittig zur späteren Turmachse positioniert sein kann. Die Mastsektion 8 kann wie im Ausführungsbeispiel als Gittermast oder als Rohrkonstruktion oder ähnliche geartete Tragstruktur ausgeführt werden. An den einen Mast 18 bildenden Mastsektionen 8 werden Arbeitsplattformen, nämlich eine untere Arbeitsplattform 9 und eine obere Arbeitsplattform 10, sowie eine Stützarmeinheit 11 gelagert und geführt. Auf den Arbeitsplattformen 9 und 10 befindet sich während der Montage das Montagepersonal. Die Arbeitsplattformen 9 und 10 sowie die Stützarmeinheit 11 sind unabhängig voneinander entlang der Mastsektionen 8 vertikal bewegbar sowie um die vertikale Achse der Mastsektionen 8 schwenkbar gelagert.

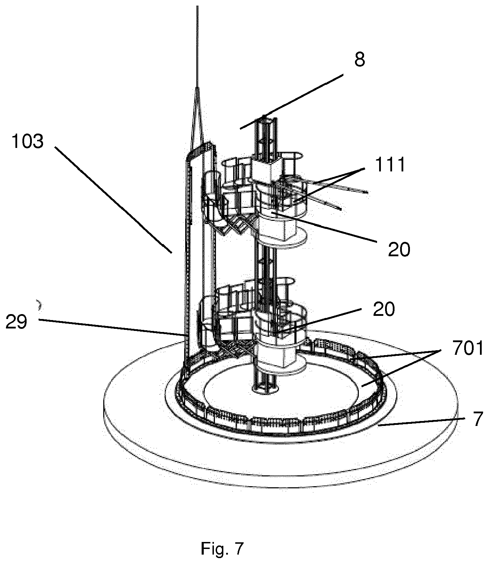

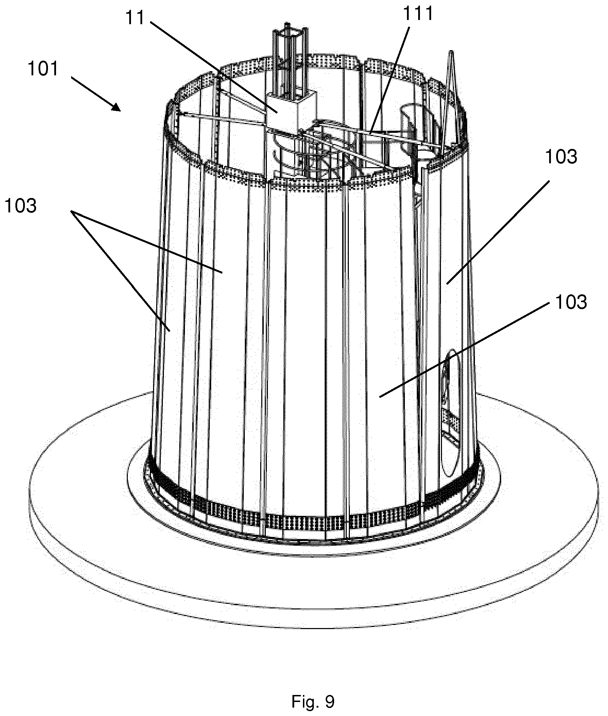

Wie insbesondere die Fig. 7 zeigt, werden auf dem Fundament 7 Turmfußsegmente 701 zur Befestigung der einzelnen Sektionssegmente 103 der Turmsektion 101 in einem vorgegebenen Durchmesser um die erste Mastsektion 8 herum angeordnet und befestigt. Mittels des ersten Krans 5 können nun nach und nach die einzelnen Sektionssegmente 103 aufgestellt werden. Jedes Sektionssegment 103 wird durch einen oder mehrere Stützarme 111 in einer vorbestimmten Position zum Mast 18 fixiert. Nach und nach werden die weiteren Sektionssegmente 103 der ersten Turmsektion 101 bis auf das letzte Sektionssegment 103 montiert. Wie die Fig. 9 erkennen lässt, werden mit Hilfe der Stützarme 111 die vorletzten zwei Sektionssegmente 103 so ausgerichtet, dass das letzte Sektionssegmente 103 zwischen den schon stehenden Sektionssegmenten 103 montiert werden kann. Dazu stützen sich die Stützarme 111 am Mast 18 und/oder an der Stützarmeinheit 11 ab und bringen die vorletzten Sektionssegmente 103 eines Segmentrings 101 in die richtige Position. Zusätzlich können Spanneinheiten für ein genaues Positionieren des letzten Sektionssegments 103 einer Turmsektion 101 eingesetzt werden. Fig. 9 zeigt die erste, nahezu fertiggestellte Turmsektion 101, welche auf dem Fundament befestigt ist, mit dem letzten noch einzusetzenden Sektionssegment 103.

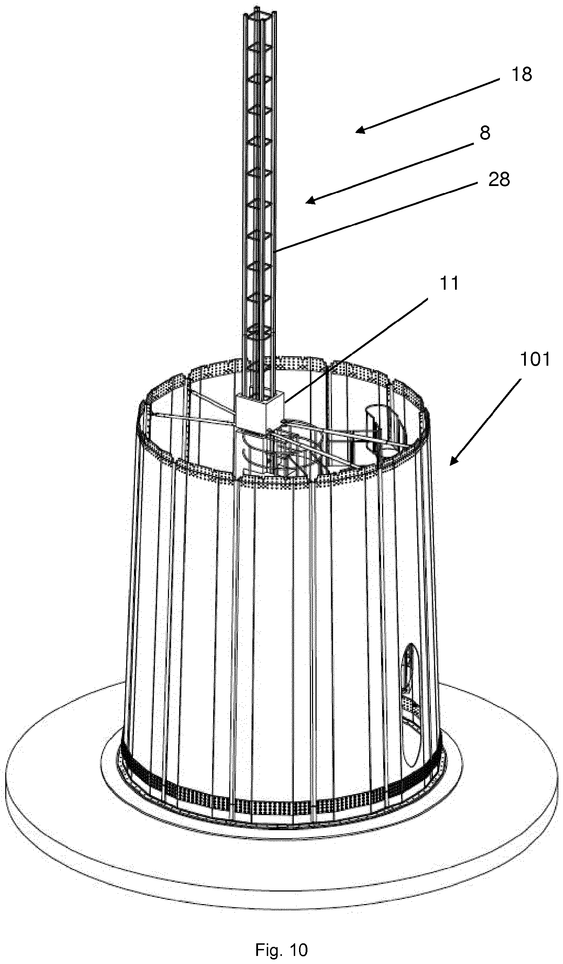

Nach der Fertigstellung der ersten Turmsektion 101 wird die erste Mastsektion 8 um eine weitere Mastsektion 8 verlängert, wie in Fig. 10 gezeigt ist, die Plattformen 9, 10 und die Stützarmeinheit 11 werden entlang dem Mast 18 hochgefahren und, falls nötig, einem "neuen", kleineren Turmdurchmesser angepasst.

An den Sektionssegmenten 103 können nicht dargestellte Positionierungselemente und/oder Positionierungsvorrichtungen vorgesehen sein, die bei einer nachfolgenden Montage der nächsten Turmsektion 101 ein radial und axial exaktes Positionieren sicherstellen.

Der aus einer Mehrzahl von Mastsektionen 8 bestehender Mast 18, z.B. Gittermast, verbleibt im fertiggestellten Stahlturm 1 und dient der Halterung einer bewegbaren Wartungs-, Service- und/oder Befahrplattform für die Personenbeförderung. Diese kann vorteilhaft aus einer der Arbeitsplattformen 9, 10 gebildet sein, welche bereits am Mast 8 vertikal verfahrbar angeordnet ist.

### Bezugszeichen

- 1: Stahlturm
- 101: Turmsektion
- 102: Turmsektion
- 103: Sektionssegment
- 2: Gondel
- 3: Rotorblatt
- 5: Kran
- 6: Kran
- 7: Fundament
- 701: Turmfußsegment
- 8: Mastsektion
- 9: Arbeitsplattform
- 10: Arbeitsplattform
- 11: Stützarmeinheit
- 111: Stützarm
- 18: Mast
- 19: Steg
- 20: Basisplattform
- 28: Führungselement
- 29: Arbeitsbühne

## Patentansprüche

1. Verfahren zur Montage eines Stahlturms (1) für eine Windenergieanlage, welcher eine Mehrzahl von Turmsektionen (101, 102) umfasst, wobei wenigstens eine Turmsektion (101, 102) aus Sektionssegmenten (103) gebildet ist, mit den Schritten:
- Verankern einer ersten Mastsektion (8) auf einem vorbereiteten Fundament (7),
- Anordnen und Positionieren einer ersten vertikal bewegbaren Arbeitsplattform (9; 10) in einer vorbestimmten Höhe an der ersten Mastsektion (8),
- Anordnen und Positionieren einer vertikal bewegbaren Stützarmeinheit (11) oberhalb der Arbeitsplattform (9, 10) an der ersten Mastsektion (8),
- Anordnen und Befestigen einer Mehrzahl von Turmfußsegmenten (701) auf dem Fundament (7),
- Aufstellen und Verbinden eines ersten Sektionssegments (103) mit einem ersten Turmfußsegment (701),
- Fixieren des ersten Sektionssegments (103) mittels wenigstens eines ausfahrbaren Stützarms (111) der Stützarmeinheit (11),
- Aufstellen und Verbinden weiterer Sektionssegmente (103) mit dem oder einem weiteren Turmfußsegment (701) und mit dem zuvor montierten Sektionssegment (103), sowie Einfügen und Fixieren des jeweils letzten Sektionssegments (103) mittels eines weiteren ausfahrbaren Stützarms (111) der Stützarmeinheit (11), bis eine vollständige erste Turmsektion (101) aufgestellt und verbunden ist, und
- Montieren und Verbinden wenigstens einer weiteren Turmsektion (101, 102) mit der ersten Turmsektion (101) unter Zuhilfenahme einer weiteren Mastsektion (8).

2. Verfahren nach Anspruch 1 mit dem zusätzlichen Schritt, dass vor dem Anordnen der Stützarmeinheit (11) eine zweite vertikal bewegbare Arbeitsplattform (10) oberhalb der ersten Arbeitsplattform (9) an der Mastsektion (8) bewegbar angeordnet wird.

3. Verfahren nach Anspruch 1 oder 2 mit dem weiteren Schritt, dass nach dem Verbinden eines Sektionssegments (103) mit einem horizontal benachbarten Sektionssegment (103) ein mit der vertikal bewegbaren Arbeitsplattform (9; 10) verbundener Steg (19) und/oder einer Arbeitsbühne (29) um einen vorbestimmten Winkel um die vertikale Achse der Mastsektion (8) geschwenkt wird.

4. Verfahren nach einem der Ansprüche 1 bis 3 mit den weiteren Schritten:
- Heben der weiteren Mastsektion (8) mit Hilfe eines Krans (5) von einem Lagerplatz,
- Absetzen der weiteren Mastsektion (8) mit Hilfe des Krans (5) in einer vorbestimmten Position auf der ersten Mastsektion (8) derart, dass eine Zahnstange und/oder ein Führungselement (28) der ersten Mastsektion (8) und eine Zahnstange und/oder eine Führungselement (28) der weiteren Mastsektion (8) miteinander fluchten und
- Verbinden der weiteren Mastsektion (8) mit der ersten Mastsektion (8) zur Bildung eines Mastes (18).

5. Verfahren nach Anspruch 4 mit den weiteren Schritten:
- Einfahren der Stützarme (111),
- Aufwärtsfahren der Stützarmeinheit (11) mittels eines Antriebs entlang der Zahnstange und/oder dem Führungselement (28),
- Ausfahren der Stützarme (111) auf ein vorbestimmtes Maß entsprechend dem vorgegebenen Abstand vom Mast (18) zu einer Innenseite des jeweils vorgesehenen Sektionssegments (103) und
- Aufwärtsfahren der Arbeitsplattform (9, 10) mittels eines Antriebs entlang der Zahnstange und/oder des Führungselements (28) des Mastes (18).

6. Verfahren nach einem der vorangegangenen Ansprüche, wobei das Montieren und Verbinden der wenigstens einen weiteren Turmsektion (101, 102) mit der vorhergehenden Turmsektion (101) die Schritte umfasst:
- Aufstellen und Verbinden eines ersten Sektionssegments (103) der weiteren Turmsektion (101) mit einem Sektionssegment (103) der ersten Turmsektion (101),
- Fixieren des Sektionssegments (103) der weiteren Turmsektion (101) mittels wenigstens eines ausfahrbaren Stützarms (111) der Stützarmeinheit (11),
- Aufstellen und Verbinden der weiteren Sektionssegmente (103), jeweils mit dem benachbarten Sektionssegment (103), sowie Einfügen und Fixieren des jeweils letzten Sektionssegments (103) mittels eines zweiten Stützarms (111) der Stützarmeinheit (11) und
- Verbinden des letzten Sektionssegments (103) mit den benachbarten Sektionssegmenten (103) zum Bilden einer vollständigen weiteren Turmsektion (101).

7. Verfahren nach Anspruch 6 mit dem weiteren Schritt:
- Aufsetzen und Verbinden eines horizontalen Turmflansches mit der obersten aus Sektionssegmenten (103) gebildeten Turmsektion (101, 102) mit Hilfe eines Krans (6).

8. Verfahren nach Anspruch 6 oder 7 mit den weiteren Schritten:
- Einfahren der Stützarme (111) der Stützarmeinheit (11),
- Hochfahren der Stützarmeinheit (11) in eine obere Position,
- Entkoppeln, Heben und Entfernen der Stützarmeinheit (11) vom Mast (18) mittels eines Krans (6).

9. Verfahren nach Anspruch 8 mit den zusätzlichen Schritten:
- Hochfahren der zweiten Arbeitsplattform (10) in eine obere Position,
- Entkoppeln, Heben und Entfernen der der zweiten Arbeitsplattform (10) vom Mast (18) mittels eines Krans (6).

10. Turm einer Windenergieanlage mit mehreren unterschiedlichen Turmsektionen (101, 102), wobei zumindest eine Turmsektion (101, 102) aus einzelnen Sektionssegmenten (103) besteht, **dadurch gekennzeichnet, dass** der Turm ein Fundament (7) mit wenigstens zwei Turmfußsegmenten (701) aufweist, wobei jedes Turmfußsegment (701) mit wenigstens einem Sektionssegment (103) verbunden ist und sämtliche Sektionssegmente (103) einer ersten horizontalen Ebene eine erste gerade oder konische Turmsektion (101) bilden, welche einen kreisförmigen oder polygonalen Querschnitt aufweist und auf dieser ersten segmentierten Turmsektion (101) eine weitere segmentierte Turmsektion (101) oder eine nichtsegmentierte Turmsektion (102) angeordnet ist, und dass ein Mast (18) zentral oder außermittig zu einer vertikalen Turmachse im Inneren der Turmsektionen (101, 102) angeordnet ist, wobei der Mast (18) wenigstens eine vertikal bewegbare Arbeitsplattform (9, 10) trägt.

11. Turm nach Anspruch 10, **dadurch gekennzeichnet, dass** der Mast (18) eine Mehrzahl von Mastsektionen (8) umfasst, die insbesondere als offenes oder geschlossenes Hohlprofil, als Gittermast oder als H-Profil ausgebildet sind.

12. Turm nach Anspruch 11, **dadurch gekennzeichnet, dass** jede Mastsektion (8) eine Zahnstange und/oder wenigstens ein Führungselement zum Führen der Arbeitsplattform (9, 10) umfasst.

13. Turm nach einem der Ansprüche 10 bis 12, **dadurch gekennzeichnet, dass** die oder jede Arbeitsplattform (9, 10) wenigstens einen ausfahrbaren und begehbaren Steg (19) und/oder eine Arbeitsbühne (29) aufweist.

14. Turm nach Anspruch 13, **dadurch gekennzeichnet, dass** die oder jede Arbeitsplattform (9, 10) eine Basisplattform (20) aufweist, an der der begehbare Steg (19) und/oder die Arbeitsbühne (29) um die vertikale Achse des Mastes (18) schwenkbar gelagert ist.
